# DEMANDE DE BREVET EUROPEEN

(11) **EP 1 316 469 A1**
(43) Date de publication de la demande: **04.06.2003**
(21) Numéro de dépôt: 02292883.2
(22) Date de dépôt: 20.11.2002
(51) Int. Cl.: B60N 2/427

(54) **Appui-tête à système d'actionnement de sécurité**

(30) Priorité: 21.11.2001 FR 0115065
(71) Demandeur: Centre d'Etudes et Recherche pour l'Automobile ( CERA), 51100 Reims (FR)
(72) Inventeur: Oliva, Miguel Angel, 17001 Girona (ES)
(74) Mandataire: Geismar, Thierry

(57) **Abrégé**

L'invention concerne un appui-tête (1) du type comprenant au moins une broche de montage (2) sur un dossier de siège (3), notamment de véhicule automobile, un support (4) monté fixe sur ladite broche (2), et un coussin d'appui (5) monté mobile par rapport audit support (4) au moyen d'un dispositif de réglage entre une première position dans laquelle le coussin d'appui (5) est sensiblement adjacent au support (4), et une deuxième position dans laquelle il est à distance du support (4), ledit appui-tête (1) comprenant un système d'actionnement du coussin (5) vers la deuxième position, ledit système étant activé par un dispositif de détection de choc.

## Description

Les appuis-tête de véhicule automobile ont pour fonction de procurer un confort aux passagers, mais plus encore d'assurer leur sécurité. Pour cela, en cas de choc, il est souhaitable qu'un élément de l'appui-tête soit actionné pour venir en contact le plus rapidement possible avec la tête du passager, de sorte à limiter le déplacement de la tête et donc les lésions pouvant en résulter.

A cet effet, on a proposé d'utiliser des dispositifs de type airbags agencés pour, lors de la détection d'un choc, gonfler un élément destiné à venir en contact avec la tête du passager.

Le déclenchement de ce type de dispositif étant réalisé par explosion, celui-ci a un temps de réaction suffisamment rapide dans le cadre de son utilisation de sécurité. Mais il présente l'inconvénient de nécessiter, après son déclenchement, une réparation complète pour être de nouveau opérationnel. En outre, il s'agit de dispositifs coûteux, qui sont plus particulièrement destinés aux voitures haut de gamme.

Par ailleurs, lorsque l'élément est gonflé, il présente une surface « dure » sur laquelle la tête en mouvement est susceptible de rebondir fortement, ce qui peut être source de lésions pour l'utilisateur.

L'invention vise à pallier ces inconvénients, en proposant un appui-tête en deux parties, dont une partie est actionnée pour venir en contact avec la tête de l'utilisateur en cas de choc, et ce grâce à un système d'actionnement simple et à déclenchement suffisamment rapide pour remplir une fonction de sécurité.

En outre, le système d'actionnement selon l'invention présente les avantages de pouvoir être facilement réamorcé après un déclenchement, et de permettre l'amortissement des rebonds de la tête de l'utilisateur.

A cet effet, et selon un premier aspect, l'invention propose un appui-tête du type comprenant au moins une broche de montage sur un dossier de siège, notamment de véhicule automobile, un support monté fixe sur ladite broche, et un coussin d'appui monté mobile par rapport audit support au moyen d'un dispositif de réglage entre une première position dans laquelle le coussin d'appui est sensiblement adjacent au support, et une deuxième position dans laquelle il est à distance du support, ledit appui-tête comprenant un système d'actionnement du coussin vers la deuxième position, ledit système étant activé par un dispositif de détection de choc.

Selon un mode de réalisation, le système d'actionnement comprend un organe mécanique actionné par un moyen d'actionnement entre un état inactif dans lequel l'organe mécanique n'interagit pas avec le dispositif de réglage, et un état actif dans lequel l'organe mécanique actionne le dispositif de réglage de sorte à déplacer le coussin dans sa deuxième position, le passage de l'état inactif à l'état actif étant réalisé par déverrouillage d'un dispositif de verrouillage actionné par le dispositif de détection.

D'autres objets et avantages de l'invention apparaîtront au cours de la description qui suit, faite en référence aux dessins annexés dans lesquels :
- la figure 1 est une vue de côté d'un appui-tête, montrant la broche de montage, le support monté sur cette broche et le coussin d'appui monté sur le support, le coussin d'appui étant dans une première position ;
- la figure 2 est une vue en coupe longitudinale de l'appui-tête représenté sur la figure 1 monté sur un dossier de siège de véhicule automobile, montrant le système d'actionnement du coussin selon un premier mode de réalisation, ledit système d'actionnement étant combiné avec un dispositif de réglage du coussin par rapport au support selon les directions X et Z ;
- la figure 3 est une vue en perspective du système d'actionnement du coussin représenté sur la figure 2, monté sur la broche de montage de l'appui-tête ;
- la figure 4 est une vue éclatée du système d'actionnement représenté sur la figure 2, ledit système d'actionnement étant combiné avec un dispositif de réglage du coussin par rapport au support selon la direction X ;
- les figures 5a et 5b sont des vues agrandies en coupe longitudinale du système d'actionnement représenté sur les figures 2 à 4 ; la figure 5a représente le système d'actionnement en position verrouillée, et la figure 5b représente le système d'actionnement en position déverrouillée ;
- la figure 6 est une vue en coupe longitudinale d'un appui-tête monté sur un dossier de siège de véhicule automobile, montrant le système d'actionnement du coussin selon une première variante du premier mode de réalisation ;
- la figure 7 est une vue en coupe longitudinale d'un appui-tête monté sur un dossier de siège de véhicule automobile, montrant le système d'actionnement du coussin selon une deuxième variante du premier mode de réalisation ;
- la figure 8 est une vue en coupe longitudinale d'un appui-tête monté sur un dossier de siège de véhicule automobile, montrant le système d'actionnement du coussin selon un deuxième mode de réalisation ;
- les figures 9a, 9b et 9c sont des vues partielles en perspective du système d'actionnement du coussin selon un troisième mode de réalisation, montrant le déplacement des moyens d'actionnement du verrouillage lors de la détection d'un choc ;
- les figures 10a et 10b sont des vues en coupe longitudinale d'un appui-tête monté sur un dossier de siège de véhicule automobile, montrant le système d'actionnement du coussin selon une troisième variante du premier mode de réalisation ; la figure 10a représente le système d'actionnement en position verrouillée, et la figure 10b représente le système d'actionnement en position déverrouillée ;
- les figures 11a, 11b et 11c sont des vues agrandies en coupe longitudinale du système d'actionnement du coussin selon une quatrième variante du premier mode de réalisation; la figure 11a représente le système d'actionnement en position verrouillée, et les figures 11b et 11c représentent le système d'actionnement en position déverrouillée, lors de la détection d'un choc ;
- les figures 12a et 12b sont respectivement une vue en perspective et une vue en coupe longitudinale d'un appui-tête monté sur un dossier de siège de véhicule automobile, montrant le système d'actionnement du coussin selon un quatrième mode de réalisation ;
- les figures 13a, 13b et 13c sont respectivement deux vues en perspective et une vue en coupe longitudinale d'un appui-tête monté sur un dossier de siège de véhicule automobile, montrant le système d'actionnement du coussin selon un cinquième mode de réalisation ; la figure 13a représente le système en position verrouillée, et la figure 13b représente le système en position déverrouillée.

En relation avec les figures, on décrit un appui-tête 1 comprenant au moins une broche de montage 2 sur un dossier de siège 3, un support 4 monté fixe sur ladite broche 2, et un coussin d'appui 5 monté mobile par rapport audit support 4.

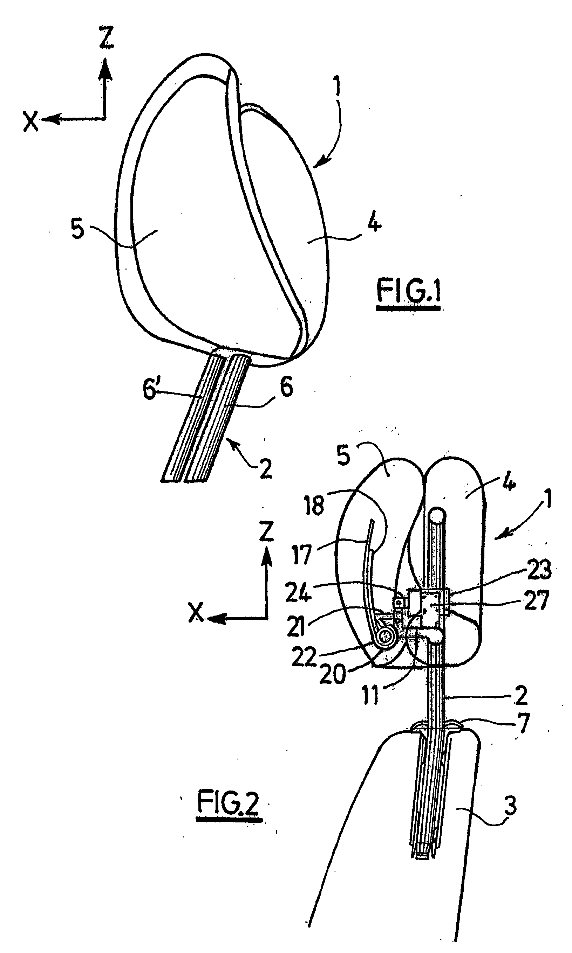

La figure 1 représente une vue de côté d'un tel appui-tête 1 monté sur un siège de véhicule automobile. L'ensemble constitué par le coussin 5 et le support 4 présente l'aspect d'un appui-tête classique. En particulier, on peut prévoir une enveloppe textile commune pour les deux parties constituant l'appui-tête 1, à savoir le coussin 5 et le support 4. En outre, il peut être prévu que le coussin 5 et le support 4 soient de forme complémentaire, afin de diminuer l'encombrement de l'appui-tête 1 tout en lui donnant une esthétique avantageuse.

La broche 2 est formée de deux tiges verticales 6 et 6' qui pénètrent par leur extrémité inférieure dans une gaine de montage 7 fixée à la partie supérieure du dossier de siège 3, leurs extrémités supérieures étant reliées par une tige horizontale 8, de telle sorte que la broche 2 présente sensiblement une forme de U renversé.

Le support 4 est monté sur la partie supérieure de la broche 2, de sorte à être fixe par rapport à celle-ci. En particulier, le support 4 peut être monté sur la broche 2 par une technique de montage classique d'un appui-tête sur une broche, ce support 4 étant typiquement formé de mousse.

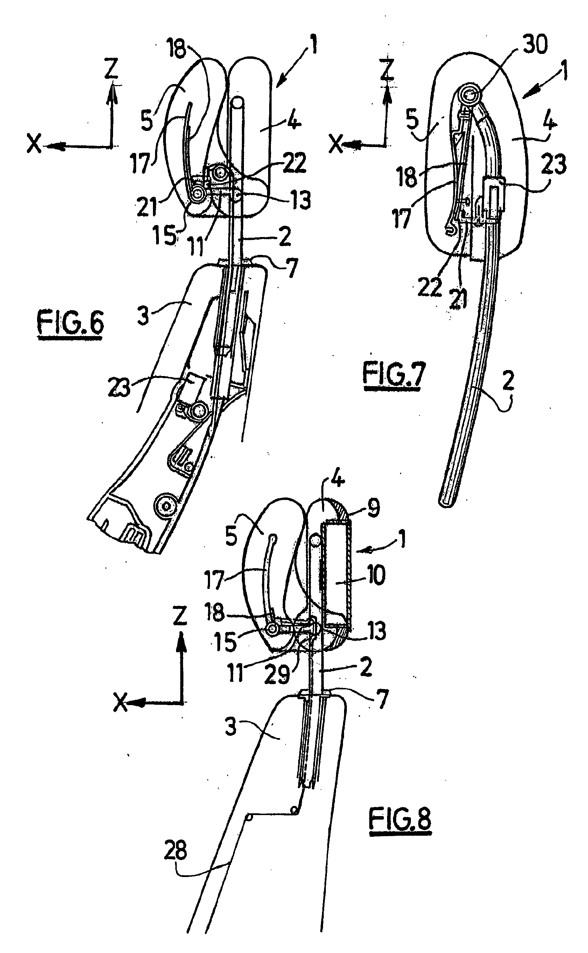

Dans un exemple particulier (figure 8), la face arrière 9 du support 4 peut comprendre un logement 10 notamment destiné à recevoir un écran vidéo, visible par les passagers arrières du véhicule.

Le coussin d'appui 5 est monté sur le support 4 au moyen d'un dispositif de réglage, de sorte à être mobile par rapport à celui-ci. Le dispositif de réglage du coussin 5 par rapport au support 4 peut être situé soit dans la partie supérieure de l'appui-tête 1 (figure 7), soit dans sa partie inférieure (figures 1 à 6 et 8).

Dans le mode de réalisation représenté sur les figures 2, 3, 6 et 8, le dispositif de réglage comprend une pièce de liaison 11 du coussin avec le support, ladite pièce étant pourvue de passages pour un ou plusieurs axes. Un axe transversal 12 situé sur la broche de montage 2 est prévu pour être disposé dans un premier passage 13 de la pièce de liaison 11. Ainsi, l'un des côtés de la pièce de liaison 11 est monté de façon rotative par rapport à la broche 2 de l'appui-tête 1, sur laquelle est monté le support 4.

En outre, un axe de rotation 14 est disposé dans un deuxième passage 15 de la pièce de liaison 11. Cet axe 14 est monté fixe dans le coussin 5, de sorte que le coussin 5 soit monté en rotation par rapport à la pièce 11.

Cette réalisation permet, en faisant pivoter la pièce 11 autour de l'axe 12, de régler la hauteur du coussin 5 par rapport au support 4 selon une direction dite Z. Elle permet en outre, en faisant pivoter le coussin 5 autour de l'axe 14, de régler la distance du coussin 5 par rapport à la tête de l'utilisateur selon une direction dite X. Ces deux rotations sont obtenues en déplaçant manuellement le coussin 5 par rapport au support 4, respectivement autour des axes 12 et 14.

Dans cette réalisation, le réglage dans les deux directions Z et X, qui est nécessaire tant d'un point de vue du confort que d'un point de vue de la sécurité, présente l'avantage d'être réalisé par un dispositif de réglage unique, intégré dans l'appui-tête.

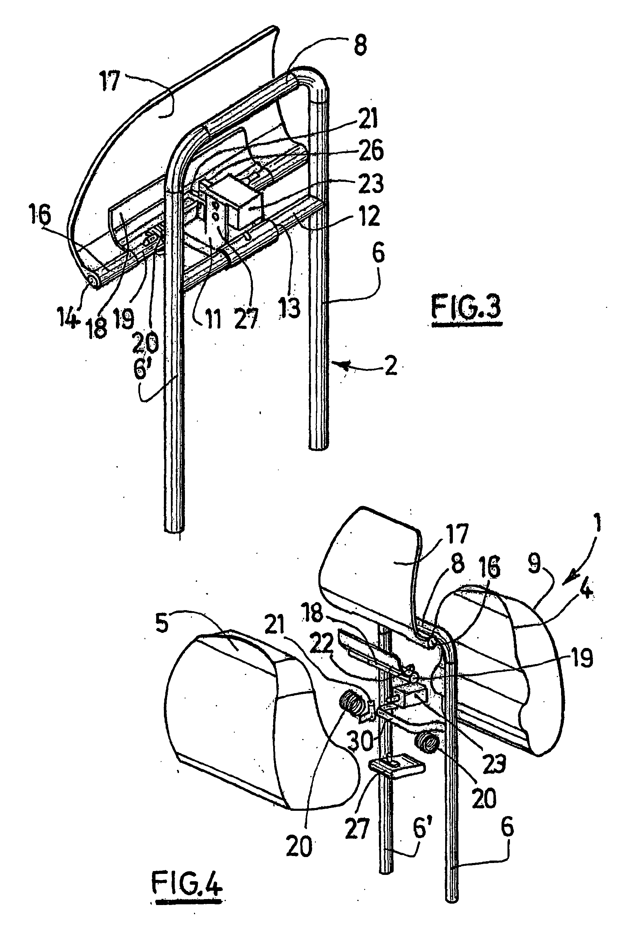

Dans les modes de réalisation représentés sur les figures 4 et 7, le dispositif de réglage auquel le système d'actionnement est combiné est agencé pour permettre le réglage seulement suivant la direction X.

A cet effet un axe de rotation 30, formant pièce de liaison entre le coussin 5 et le support 4, est prévue sur la broche 2, le coussin d'appui 5 étant monté en rotation par rapport au support 4 autour de cet axe 30.

La réalisation de la figure 4 prévoit que l'axe 30 soit disposé entre les tiges verticales 6, 6' en étant décalé par rapport au plan de la broche 2 du coté du coussin d'appui 5. La réalisation de la figure 7 prévoit que l'axe 30 soit formé par la tige horizontale 8. Dans ces deux réalisations, l'axe 30 est intégré à la broche 2 en une seule pièce.

Dans ce mode de réalisation, le réglage dans la direction Z peut être réalisé en prévoyant que la gaine de montage 7 soit pourvue d'un dispositif de réglage agencé pour permettre le coulissement et le blocage de la broche 2 dans ladite gaine 7, de sorte à déplacer sélectivement l'appui-tête suivant Z.

Dans tous ces modes de réalisation, par réglage suivant X, le coussin 5 peut prendre deux positions extrêmes : une première position dans laquelle il est sensiblement adjacent au support 4, et une deuxième position dans laquelle il est à distance du support 4.

Entre ces deux positions extrêmes, le coussin 5 peut être réglé par l'utilisateur dans une pluralité de positions suivant X, et ce par rotation du coussin 5 par rapport au support 4.

En cas de choc, il est important que le coussin 5 se place le plus rapidement possible dans sa deuxième position, pour limiter les risques de lésions de l'utilisateur en limitant le déplacement de la tête.

A cet effet, il est prévu un système d'actionnement du coussin 5 combiné avec le dispositif de réglage. Ce système d'actionnement comprend un organe mécanique actionné par un moyen d'actionnement entre un état inactif dans lequel l'organe mécanique n'interagit pas avec le dispositif de réglage, et un état actif dans lequel l'organe mécanique actionne le dispositif de réglage de sorte à déplacer le coussin dans sa deuxième position extrême suivant X.

Le passage de l'état inactif à l'état actif est réalisé par déverrouillage d'un dispositif de verrouillage actionné par un dispositif de détection de choc, par exemple formé d'un capteur. Ce dispositif de verrouillage comprend des moyens de verrouillage et des moyens d'actionnement du verrouillage.

On décrit ci-dessous, en relation avec les figures 2 à 8, un premier et un deuxième mode de réalisation du système d'actionnement du coussin 5.

Dans les modes de réalisation représentés, l'axe 14, 30 pénètre dans des passages 16 prévus à cet effet dans une palette rigide 17. La palette 17 s'étend à l'intérieur du coussin d'appui 5, et permet notamment d'assurer une certaine rigidité dudit coussin 5.

L'organe mécanique susceptible de passer d'un état inactif à un état actif est ici une contre-palette 18 montée dans le coussin d'appui 5, et disposée entre la broche de montage 2 et la palette 17. Cette contre-palette 18 comprend des passages 19 pour l'axe 14, 30 de sorte à pouvoir passer d'un état à l'autre, grâce à des moyens d'actionnements formés de ressorts de torsion 20 montés sur l'axe 14, 30.

Dans son état inactif, la contre-palette 18 est disposée à distance ou sensiblement adjacente à la palette 17. Dans son état actif, la position de la contre-palette 18 correspond à la position de la palette 17 lorsque le coussin 5 est dans sa deuxième position extrême.

Le passage de l'état inactif à l'état actif se fait par déverrouillage du dispositif de verrouillage, dont les moyens de verrouillage sont constitués, dans les modes de réalisation des figures 2 à 8, d'un crochet 21 coopérant avec un contre-crochet 22 associé à la contre palette 18. Dans les modes de réalisation des figures 2 à 6 et 8, l'ensemble crochet 21 / contre-crochet 22 est prévu à proximité de l'axe de rotation 14, 30 alors que dans le mode de réalisation de la figure 7, cet ensemble est prévu à distance de cet axe 14, 30.

Lorsque la contre-palette 18 est dans l'état inactif, son contre-crochet 22 est engagé dans le crochet 21, et les ressorts 20 sont maintenus en charge.

Lors de la détection d'un choc, le dispositif de détection transmet un signal aux moyens d'actionnement du verrouillage, qui actionnent les moyens de verrouillage, en libérant le crochet 21. Cette action conduit à la libération de la contre-palette 18 qui se déplace sous l'action des ressorts 20. La contre-palette 18 vient alors en appui sur la palette 17, par rotation autour de l'axe 14, 30, et le coussin 5 passe dans sa deuxième position extrême, c'est-à-dire la position dans laquelle il vient en contact avec la tête de l'utilisateur.

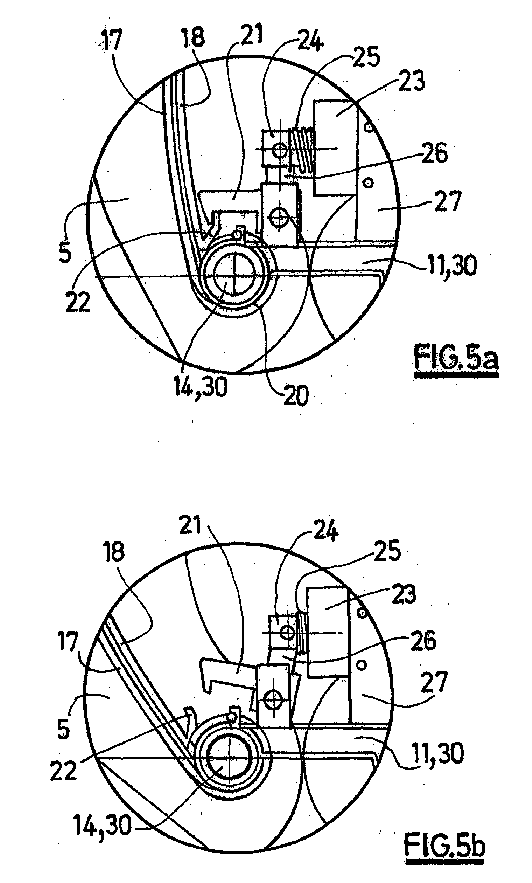

Dans le mode de réalisation représenté sur les figures 2 à 7, les moyens d'actionnement du verrouillage comprennent un électroaimant 23 associé à une barre 24 entourée d'un ressort de rappel 25. La barre 24 est associée au crochet 21 par l'intermédiaire d'une biellette 26 (figure 5a).

Lors de la détection du choc (figure 5b), l'électroaimant 23 est activé par un signal émis par le dispositif de détection de choc, de sorte à provoquer une translation de la barre 24. La biellette 26 transforme ce mouvement de translation en mouvement de rotation vers le haut du crochet 21, de sorte à libérer le contre-crochet 22.

Cette réalisation permet d'obtenir des temps de réaction du système qui sont compatibles avec la fonction de sécurité, notamment inférieurs à 50 ms.

Selon le mode de réalisation représenté sur les figures 2 à 5 et 7, l'électroaimant 23 est disposé au voisinage de l'ensemble crochet 21 / contre-crochet 22, et est fixé à la broche 2 par des plaques de fixation 27.

Dans le mode de réalisation représenté sur les figures 2 à 5, et la figure 7, l'électro-aimant 23 est donc situé dans le support 4 de l'appui-tête 1, et proche du dispositif de réglage du coussin 5 par rapport au support 4. Le système d'actionnement et le dispositif de réglage présentent ainsi l'avantage de former un ensemble compact.

Dans une variante de ce premier mode de réalisation, illustrée par la figure 6, l'électroaimant 23 est situé à l'intérieur du dossier de siège 3 de sorte à limiter les contraintes d'intégration de l'électroaimant 23 dans l'appui-tête 1.

Selon un deuxième mode de réalisation illustré par la figure 8, les moyens d'actionnement du verrouillage sont constitués d'une bande 28, par exemple textile, située dans le dossier du siège 3, et d'un câble 29 reliant cette bande 28 au crochet 21. Lors d'un choc, l'appui du dos du passager contre le dossier du siège 3 entraîne la tension de la bande 28, ce qui a pour conséquence le soulèvement du crochet 21.

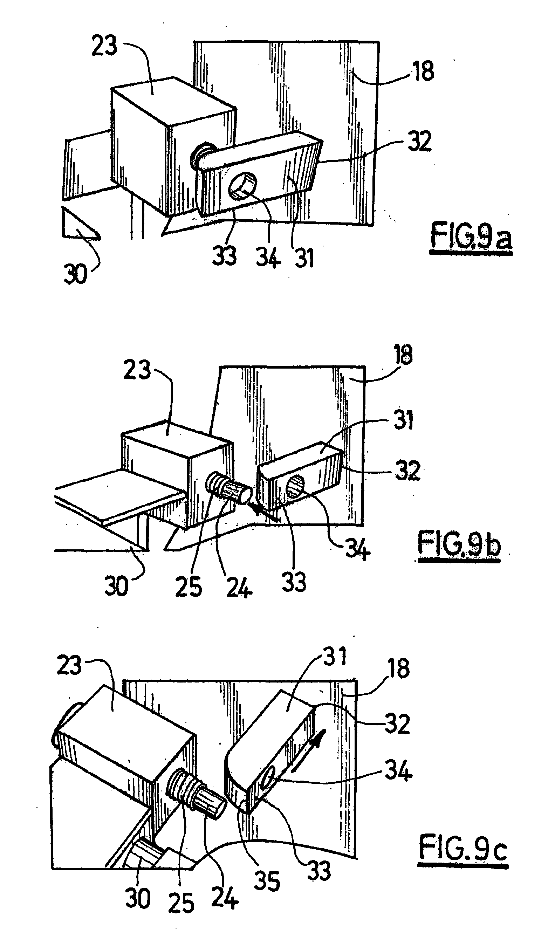

Selon un troisième mode de réalisation, illustré par la figure 9, les moyens d'actionnement du verrouillage comprennent un électroaimant 23 associé à l'axe 30, et pourvu d'une barre 24 entourée d'un ressort de rappel 25, et les moyens de verrouillage sont constitués d'une plaque 31 associée par l'une de ses extrémités 32 à la contre palette 18, par exemple par soudage.

L'autre extrémité 33 de la plaque 31 comprend un orifice 34 agencé pour recevoir la barre 24 de l'électroaimant 23, lorsque la contre palette 18 est dans l'état inactif (figure 9a).

Lors de la détection du choc, l'électroaimant est activé par un signal émis par le dispositif de détection de choc, de sorte à provoquer une translation de la barre 24. Celle-ci sort alors de l'orifice 34 dans lequel elle était insérée, libérant ainsi la plaque 31 (figure 9b). Cette action conduit à la libération de la contre palette 18 qui, sous l'action des ressorts 20, vient en appui sur la palette 17 (figure 9c).

Cet arrangement présente l'avantage de réduire les risques de déverrouillage du système dus aux vibrations du véhicule.

D'autres moyens d'actionnement du verrouillage électriques ou électromagnétiques peuvent également être utilisés, lesdits moyens devant permettre d'obtenir des temps de réaction du système compatibles avec la fonction de sécurité dudit système.

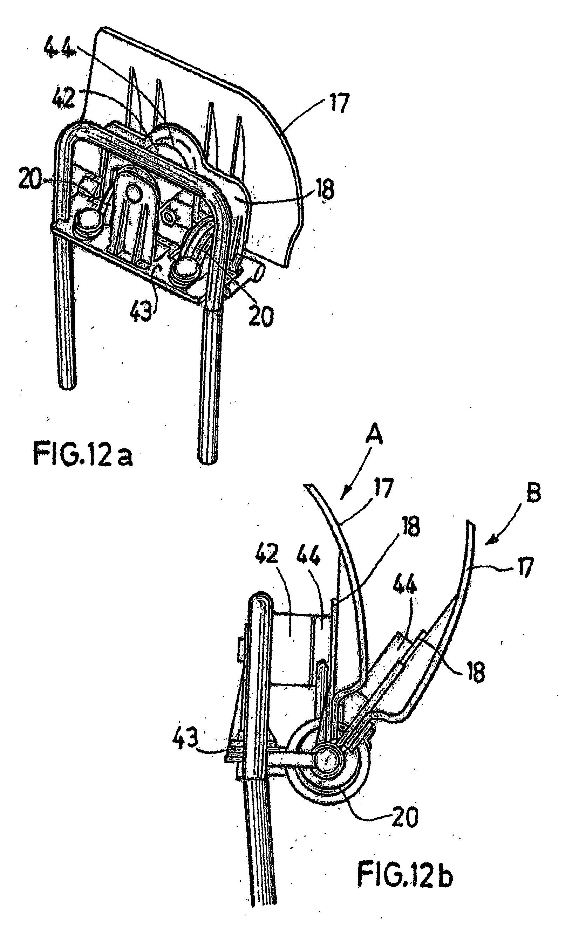

En particulier, selon le quatrième mode de réalisation représenté sur les figures 12a et 12b, le système d'actionnement du coussin 5 comprend un aimant permanent 42 fixé à une plaque 43 qui est associée à la broche 2, et un anneau métallique 44 solidaire d'une contre-palette 18. L'aimant permanent 42 et l'anneau métallique 44 sont agencés pour permettre le maintien du coussin 5 dans sa première position.

Lors de la détection du choc, un signal électrique alimente un circuit électrique qui est agencé pour produire un champ magnétique apte à neutraliser l'aimant 42, et provoquer ainsi la dissociation de l'aimant 42 avec l'anneau 44. Cette dissociation entraîne ainsi la libération de la palette 17 sous l'action des ressorts de torsion 20, et par conséquent le passage du coussin 5 de sa première position (lettre A sur la figure 12b) à sa deuxième position (lettre B sur la figure 12b). Ce mode de réalisation permet d'optimiser le temps de réponse du système, et présente l'avantage d'être peu sensible aux vibrations du véhicule.

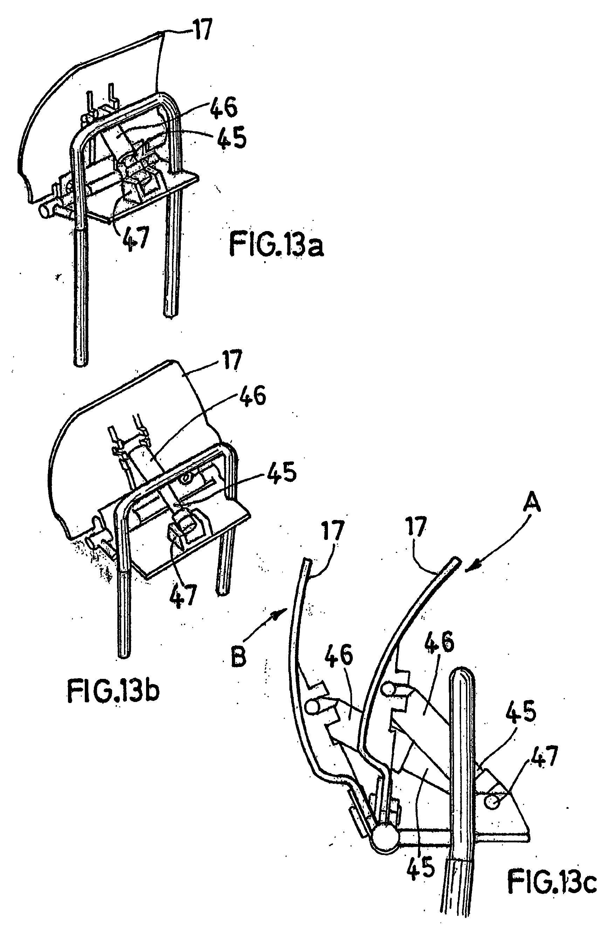

Dans un cinquième mode de réalisation, représenté sur les figures 13a, b, c, les moyens d'actionnement du verrouillage comprennent un piston 45 disposé entre la broche 2 et l'organe mécanique formé de la palette 17, et une charge explosive placée dans le piston 45.

Lors de la détection du choc, l'émission d'un signal électrique provoque l'explosion de la charge placée dans le piston 45. Sous l'effet de l'explosion, le piston 45 coulisse, ce qui entraîne la rotation dudit piston autour de l'axe 47, et le coussin 5 passe de sa première position (lettre A sur la figure 13c) vers sa deuxième position (lettre B sur la figure 13c). Ce mode de réalisation présente notamment l'avantage de ne pas nécessiter la présence des ressorts de torsion 20, ce qui simplifie le système.

Le système d'actionnement selon l'invention présente l'avantage de pouvoir être réamorcé facilement après un déclenchement.

En effet, après la détection d'un choc, les moyens d'actionnement du verrouillage sont désactivés de sorte à permettre le réamorçage du système par déplacement de l'appui-tête 1 vers sa première position. Dans les modes de réalisation des figures 2 à 8, ce déplacement entraîne le réenclenchement du contre-crochet 22 dans le crochet 21 et, dans le mode de réalisation de la figure 9, ce déplacement entraîne la réinsertion de la tige 24 dans l'orifice 34, cette insertion étant facilitée par la forme arrondie de la surface 35.

En particulier, ce système présente l'avantage de ne nécessiter aucune réparation, après son déclenchement, pour être de nouveau opérationnel.

En outre, le système d'actionnement permet d'amortir les rebonds de la tête du passager, en ce que l'appui de la tête du passager contre le coussin 5 fait revenir celui-ci dans sa première position. Le passage du coussin 5 de sa deuxième à sa première position induit la charge des ressorts 20, ce qui permet d'absorber une partie de l'énergie cinétique due au déplacement de la tête. De plus, le système dans sa première position étant réamorcé par désactivation des moyens d'actionnement du verrouillage, le coussin 5 est bloqué dans sa première position par le système d'actionnement. La combinaison de ces deux phénomènes permet donc de limiter efficacement les phénomènes de rebond.

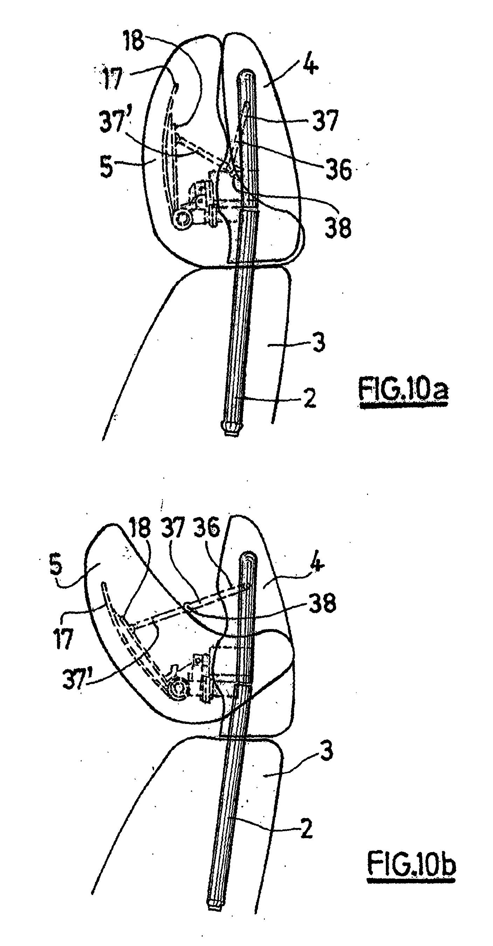

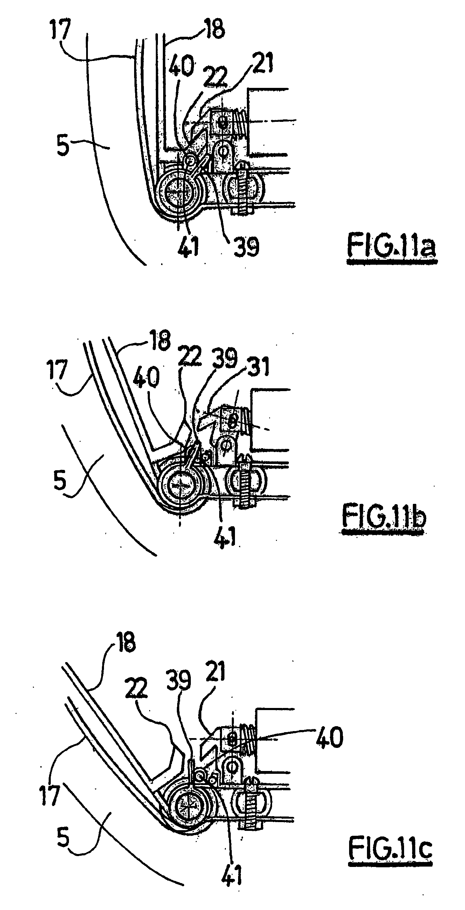

Toutefois, on peut également prévoir un dispositif de blocage destiné à empêcher le retour du coussin 5 dans sa première position, après déclenchement du système d'actionnement. Les figures 10 et 11 représentent chacune un mode de réalisation d'un tel dispositif.

Dans le mode de réalisation représenté sur les figures 10, le dispositif de blocage comprend deux biellettes 36 fixées d'une part respectivement à la partie supérieure des tiges 6 et 6' de la broche 2, et d'autre part à la contre palette 18. Chaque biellette comprend deux parties 37 et 37' mobiles en rotation l'une par rapport à l'autre, autour d'un axe de rotation 38.

Lorsque le coussin 5 est dans sa première position (figure 10a), les deux parties 37 et 37' sont articulées de telle sorte que chaque biellette 36 ait une forme de V. Puis, lors du déclenchement du système d'actionnement (figure 10b), les deux parties 37 et 37' se déplacent en rotation l'une par rapport à l'autre, de telle sorte que chaque biellette 36 soit complètement déployée afin de bloquer le coussin 5 dans sa deuxième position.

La figure 11 représente un autre mode de réalisation d'un tel dispositif destiné à empêcher le retour du coussin vers sa première position, après déclenchement du système d'actionnement.

Dans ce mode de réalisation, le dispositif de blocage comprend un picot 39 solidaire en rotation de la contre palette 18, lorsque celle-ci se déplace de sorte à faire passer le coussin 5 de sa première position (figure 11a) à sa deuxième position (figure 11c).

Le dispositif de blocage comprend des moyens de blocage 40 agencés pour interagir avec le picot 39. A cet effet, les moyens de blocage 40 comprennent un axe 41 monté sur ressort, dont l'extrémité libre est biseautée, de sorte à laisser libre le passage du picot lorsque le coussin 5 passe de sa première à sa deuxième position (figure 11b), et à bloquer son passage dans l'autre sens, de sorte à empêcher le retour du coussin 5 vers sa première position.

## Revendications

1. Appui-tête (1) du type comprenant au moins une broche de montage (2) sur un dossier de siège (3), notamment de véhicule automobile, un support (4) monté fixe sur ladite broche (2), et un coussin d'appui (5) monté mobile par rapport audit support (4) au moyen d'un dispositif de réglage entre une première position dans laquelle le coussin d'appui (5) est sensiblement adjacent au support (4), et une deuxième position dans laquelle il est à distance du support (4), **caractérisé en ce qu'**il comprend un système d'actionnement du coussin (5) vers la deuxième position, ledit système étant activé par un dispositif de détection de choc.

2. Appui-tête (1) selon la revendication 1, **caractérisé en ce que** le système d'actionnement comprend un organe mécanique (18) actionné par un moyen d'actionnement entre un état inactif dans lequel l'organe mécanique (18) n'interagit pas avec le dispositif de réglage, et un état actif dans lequel l'organe mécanique (18) actionne le dispositif de réglage de sorte à déplacer le coussin (5) dans sa deuxième position, le passage de l'état inactif à l'état actif étant réalisé par déverrouillage d'un dispositif de verrouillage actionné par le dispositif de détection de choc.

3. Appui-tête (1) selon la revendication 2, **caractérisé en ce que** le dispositif de réglage est agencé pour permettre la rotation du coussin (5) depuis sa première vers sa deuxième position autour d'un axe (14, 30), le moyen d'actionnement comprenant un ressort de torsion (20) qui dans la première position du coussin (5) est maintenu en charge.

4. Appui-tête (1) selon la revendication 3, **caractérisé en ce que** le dispositif de réglage comprend une pièce de liaison (11, 30) entre le coussin (5) et le support (4), une palette (17) s'étendant à l'intérieur du coussin (5) étant associée de façon rotative à ladite pièce de liaison (11, 30) de sorte, par rotation, à régler le coussin (5) par rapport au support (4) selon une direction X.

5. Appui-tête (1) selon l'une des revendications 2 à 4, **caractérisé en ce que** le dispositif de verrouillage comprend des moyens de verrouillage, lesdits moyens de verrouillage comprenant un crochet (21) actionné par des moyens d'actionnement du verrouillage, et un contre-crochet (22) situé sur l'organe mécanique (18).

6. Appui-tête (1) selon la revendication 5, **caractérisé en ce que** les moyens d'actionnement du verrouillage comprennent un électroaimant (23).

7. Appui-tête (1) selon la revendication 5, **caractérisé en ce que** les moyens d'actionnement du verrouillage comprennent une bande textile (28) associée à un câble (29), ladite bande (28) étant disposée dans le dossier du siège (3).

8. Appui-tête (1) selon l'une des revendications 2 à 4, **caractérisé en ce que** les moyens d'actionnement du verrouillage comprennent une plaque (31) associée par l'une de ses extrémités (32) à l'organe mécanique (18), et dont l'autre extrémité (33) est agencée pour interagir avec un électroaimant (23).

9. Appui-tête selon l'une des revendications 2 à 4, **caractérisé en ce que** le système d'actionnement du coussin (5) comprend un aimant permanent (42) associé à la broche (2), un anneau métallique (44) solidaire de l'organe mécanique (18), et un circuit électrique agencé pour provoquer la dissociation de l'anneau métallique (44) et de l'aimant (42).

10. Appui-tête selon la revendication 2, **caractérisé en ce que** le moyen d'actionnement comprend un piston (45) disposé entre la broche (2) et l'organe mécanique, une charge explosive étant placée à l'intérieur dudit piston (45).

11. Appui-tête (1) selon l'une des revendications 1 à 10, **caractérisé en ce qu'**il comprend des moyens de blocage (36, 40) du coussin (5) dans sa deuxième position.

12. Appui-tête (1) selon l'une des revendications 1 à 11, **caractérisé en ce que** le dispositif de réglage comprend un moyen permettant le réglage du coussin par rapport au support selon une direction Z.

13. Appui-tête (1) selon l'une des revendications 1 à 11, **caractérisé en ce que** la broche de montage (2) est montée coulissante dans le dossier du siège (3), de sorte à réaliser le réglage suivant Z.

14. Appui-tête (1) selon l'une des revendications 1 à 13, **caractérisé en ce que** le dispositif de réglage du coussin (5) par rapport au support (4) est situé dans la partie supérieure de l'appui-tête (1).

15. Appui-tête (1) selon l'une des revendications 1 à 13, **caractérisé en ce que** le dispositif de réglage du coussin (5) par rapport au support (4) est situé dans la partie inférieure de l'appui-tête (1).
